# EUROPÄISCHE PATENTSCHRIFT

(11) **EP 0 745 012 B1**
(45) Veröffentlichungstag und Bekanntmachung des Hinweises auf die Patenterteilung: **26.08.1998**
(21) Anmeldenummer: 95910486.0
(22) Anmeldetag: 15.02.1995
(51) Int. Cl.: B23C 5/22, B23C 5/00, B23C 5/28

(54) **FRÄSER**
MILLING CUTTER
FRAISE

(30) Priorität: 19.02.1994 DE 9402775 U
(43) Veröffentlichungstag der Anmeldung: 04.12.1996
(73) Patentinhaber: KENNAMETAL HERTEL AG Werkzeuge + Hartstoffe, 90766 Fürth (DE)
(72) Erfinder: JÄGER, Horst, D-90451 Nürnberg (DE); MÜLLER, Gebhard, D-90766 Fürth (DE)
(74) Vertreter: Tergau, Enno, Dipl.-Ing.
(86) Internationale Anmeldenummer: EP9500547
(87) Internationale Veröffentlichungsnummer: WO9522425

(56) Entgegenhaltungen:
- EP-A- 0 024 597
- EP-A- 0 104 517
- CH-A- 670 969
- US-A- 3 104 453
- PATENT ABSTRACTS OF JAPAN vol. 83, no. 06 (M-130) 21. Mai 1982 & JP,A,57 021 217 (NISSAN MOTOR CO) 3. Februar 1982

## Beschreibung

Die Erfindung betrifft einen Fräser mit den Merkmalen des Oberbegriffes des Anspruchs 1.

Bei einem aus DE 40 03 862 A1 vorbekannten Fräser der eingangs genannten Art liegen die mit Schneidplatten bestrückten Tragkörper jeweils einzeln in von der Stirnseite des Grundkörpers im wesentlichen parallel zu dessen Längsachse bzw. zur Rotationsachse des Fräsers eingebrachten Ausnehmungen ein. Die Tragkörper sind in ihrer jeweiligen Ausnehmung durch von der Stirnseite des Grundkörpers her betätigbare Spannvorrichtungen radial nach außen gegen die Wand der Ausnehmung verspannt. Dadurch ist eine sichere Abstützung gegen die im Betrieb auf die Tragkörper einwirkenden Fliehkräfte gewährleistet. Die Ausnehmungen zur Aufnahme der Tragkörper müssen einzeln ausgebohrt bzw. ausgefräst werden. Dadurch ist die Herstellung des Fräsers sehr kompliziert und kostspielig. Weiterhin müssen die Ausnehmungen zur Aufnahme der einzelnen Spannvorrichtungen einseitig aufgeweitet werden. Die dort verwendeten Spannvorrichtungen sind nämlich Spannkeile und die weiteren Maßnahmen zu deren Unterbringung bedingen weitere aufwendige Fertigungsschritte.

Der Erfindung liegt die Aufgabe zugrunde, einen Fräser der eingangs genannten Art mit gegen die Fliehkräfte wirksamer radialer Abstützung der Tragkörper zu schaffen, der ohne Funktionseinbuße fertigungstechnisch einfach herstellbar ist. Diese Aufgabe wird durch die Merkmalskombination des Anspruches 1 gelöst.

Durch die erfindungsgemäße Lösung lassen sich die Zentralfläche, die Umfangsfläche und die zwischen ihnen gebildete Stufe in einfacher Weise in einer einzigen Aufspannung fertig bearbeiten. Dasselbe trifft auch für die Haltescheibe zu und die Tragkörper sind ebenfalls von einer einfach herstellbaren Grundform. Dadurch zeichnet sich der Fräser durch eine besonders große Plan- und Rundlaufgenauigkeit aus, weil eben die Tragkörperbettungen in derselben Aufspannung und gewissermaßen in einem Schnitt hergestellt werden. In diesem Arbeitsgang werden nämlich sowohl die Auf-als auch die Anlageflächen für sämtliche Tragkörper, d.h. also für die Schneidplatten hergestellt.

Die Nuten der Haltescheibe können aufgrund ihrer radialen Ausrichtung präzise, in Beanspruchungsrichtung kerbarm und z.B. durch Drahterodieren besonders wirtschaftlich gefertigt werden.

Die Einfachheit der Herstellung wird noch durch die Formgestaltungen nach Anspruch 2 begünstigt.

Durch die spezielle Formgebung nach Anspruch 3 laßt sich jedenfalls die wesentliche Formgebung von Umfangsflache, Zentralfläche und der Stufe des Grundkörpers sowie der Gegenfläche der Haltescheibe durch Drehen zerspanend herstellen und es ist anschließend in einfacher Weise ein Plan- und Rundschliff der durch den Drehvorgang vorgeformten, miteinander zusammenwirkenden Oberflächen von Grundkörper und Haltescheibe möglich.

Durch Anspruch 4 ist eine besonders sichere Verspannung der Tragkörper gegenüber dem Grundkörper gewährleistet. Diese Verspannung ermöglicht eine erhöhte Verschiebesicherung für die Tragkörper In Richtung der Grundkörperachse.

Durch Anspruch 5 ist eine weitgehend flächenförmige Anlage der Tragkörper am Grundkörper gewährleistet. Diese Wirkung wird durch Anspruch 6 weiter verbessert.

Anspruch 8 schafft eine weitgehend flächenförmige Anlage des Tragkörpers am Grundkörper auch mit radial nach außen gegen die Fliehkraft gerichteter Wirksamkeit.

Die konstruktiven Grundkomponenten schaffen die Möglichkeit einer einfachen Schraubspannung der Tragkörper nach Anspruch 9.

Die Maßnahme nach Anspruch 10 bewirkt eine gleichmäßige Verspannung des Tragkörpers gegenüber dem Grundkörper.

Die Maßnahme nach Anspruch 11 geht davon aus, daß zur Fertigungsvereinfachung der Tragkörper die Schneidplatten mit ihrer Spanfläche etwa parallel zu den Tragkörperflanken ausgerichtet sind. Dann bewirkt die Maßnahme nach Anspruch 11 einen positiven Spanwinkel, der die Spanbildung und die Spanabfuhr zur Fräserachse hin und aus dem Bereich der Schneiden der Schneidplatten heraus begünstigt. Dies ist eine Zweckmäßigkeit besonders bei mit hoher Umfangsgeschwindigkeit angetriebenen Fräsern.

Durch Anspruch 12 wird die Zentrierung der Haltescheibe gegenüber dem Grundkörper vereinfacht und bei der Montage selbsttätig hergestellt.

Durch Anspruch 13 läßt sich der Ringvorsprung besonders einfach zunächst auch in einem Drehverfahren herstellen.

Durch Anspruch 14 ergibt sich ein äußerst geringer Abstand zwischen der Stirnfläche des hier durch die Haltescheibe gebildeten Fräserkörpers und dem Werkstück, so daß sich dort keine Späne ansammeln bzw. mit einem geringen Luftvolumen ein großer Luftdruck aufgebaut werden kann, der zum radialen Abblasen der Späne aus dem Umfangsbereich des Fräsers vorteilhaft ist.

Anspruch 15 unterstützt den störungsfreien Abtransport der Späne.

Durch Anspruch 16 weist der gesamte, mehrteilig aufgebaute Fräserkörper einen einheitlichen Wirkdurchmesser auf. Dies begünstigt die Wirksamkeit des Auffangens und Absaugens von Spänen im bzw. aus dem Umfangsbereich des Fräsers. Aufgrund des einheitlichen Wirkdurchmessers kann der Fräser montagetechnisch einfach in Kombination mit einer Auffangvorrichtung für die Späne verwendet werden.

Durch Anspruch 17 sind in sehr günstiger Lage und Wirksamkeit Spankammern zum unmittelbaren Auffangen und Abtransport der Späne in der Nähe der in Einsatzstellung befindlichen Schneidplattenschneiden angeordnet. In Kombination mit den vorhandenen Fliehkräften lassen sich dadurch die Späne selbsttätig in Umfangsrichtung absaugen.

Anspruch 18 begünstigt eine besonders schwingungssichere Verbindung zwischen Haltescheibe und Grundkörper.

Durch Anspruch 20 sind die Tragkörper gegenüber den auf sie einwirkenden drei Schnittdruckkomponenten flächenförmig wirksam abgestützt, wobei die hier gewährleistete zuätzliche Spannflankenabstützung gegen den besonders wesentlichen Hauptschnittdruck wirksam ist.

Gemäß Anspruch 21 sind die Tragkörper gegen die auf sie einwirkende Fliehkraft zusätzlich durch die Haltescheibennuten abgestutzt.

Die Erfindung wird anhand eines in den Figuren dargestellten Ausführungsbeispiels näher erläutert. Es zeigen:
- Fig. 1: eine prinzipielle Seitenansicht - teilweise im Schnitt - des Fräsers etwa entlang der Schnittlinie I-I in Fig. 3,
- Fig. 2: einen diametralen Schnitt entsprechend der Schnittlinie II-II in Fig. 3,
- Fig. 3: eine Draufsicht auf das untere Arbeitsende des Fräsers in Blickrichtung von Pfeil III in Fig. 1 und 2,
- Fig. 4: eine Draufsicht auf die das Arbeitsende des Fräsers bildende Haltescheibe ebenfalls in Blickrichtung der Pfeile III in Fig. 1 und 2,
- Fig. 5: eine Seitenansicht - teilweise im Schnitt - des Fräserumfanges im Bereich eines mit einer Schneidplatte bestückten Tragkörpers etwa in Pfeilrichtung V von Fig. 3,
- Fig. 6a: eine vergrößerte Schnittdarstellung des umfangsseitigen Endes des Grundkörpers im Bereich VI von Fig. 1,
- Fig. 6b: eine vergrößerte Darstellung des mit einer Schneidplatte bestückten und am Grundkörper verspannten Tragkörper des Bereiches VI von Fig. 1,
- Fig. 7: eine schematische Draufsicht auf einen mit einer Schneidplatte bestückten Tragkörper mit Blickrichtung auf die Spanfläche der Schneidplatte in Blickrichtung VII von Fig. 8,
- Fig. 8: eine Seitenansicht in Pfeilrichtung VIII von Fig. 7,
- Fig. 9: einen diametralen Querschnitt durch den Fräser ähnlich Fig. 2 in Kombination mit einer den gesamten Fräser umgebenden Abführungsvorrichtung für Späne.
- Fig. 10: eine Draufsicht auf die Arbeitsfläche der Einheit in Blickrichtung des Pfeils X in Fig. 9,

Der Fräser besteht im wesentlichen aus dem um seine Längsachse 1 durch die Werkzeugmaschinenspindel 2 rotierend antreibbaren Grundkörper 3 und an dessen Umfang verteilt angeordneten Tragkörpern 4 für Schneidplatten 5 aus einem harten Schneidwerkstoff. Die Tragkörper 4 sind gegen die auf sie einwirkende, radial zur Langsachse 1 wirksamen Fliehkraft durch einen Anschlag im Grundkörper 3 abgestützt. Als Abstützung dient hier die gegen die Fliehkraftwirkung gestellte Stufe 6. Die Tragkörper 4 sind gegen den Grundkörper 3 und insbesondere gegen die Stufe 6 verspannt. Die Verspannung erfolgt im wesentlichen in Richtung der Spannachse 7.

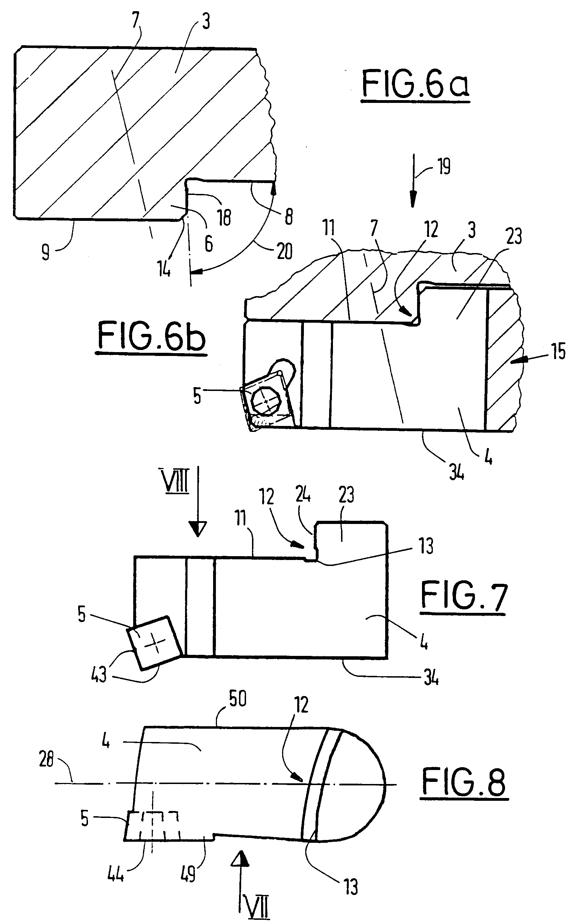

Die Stirnseite des Grundkörpers 3 wird durch eine Zentralfläche 8 und durch eine diese kranzartig umgebende Umfangsfläche 9 gebildet (Fig. 6a). Das Höhenniveau der Umfangsfläche 9 steht über das Höhenniveau der Zentralfläche 8 in Richtung der Längsachse 1 gegen das zu bearbeitende Werkstück 10 hinaus. Die Zentralfläche 8 und die Umfangsfläche 9 bilden zwischen sich die als Grundkörperanschlag wirksame Stufe 6. Die Tragkörper 4 weisen an ihrem Boden 11 eine Gegenstufe 12 auf, die mit der Stufe 6 des Grundkörpers 3 formschlüssig zusammenwirken. Die Tragkörper 4 sind mit ihrer Gegenstufe 12 gegen die Stirnseite des Grundkörpers 3 in Richtung der Spannachse 7 derart verspannt, daß die Gegenstufe 12 mit ihrem inneren Zwickel 13 auf die Stufenkante 14 (Fig. 6a) gezogen wird derart, daß die Stufenkante 14 nach Art etwa eines Keiles den Zwickel 13 der Gegenstufe 12 beaufschlagt.

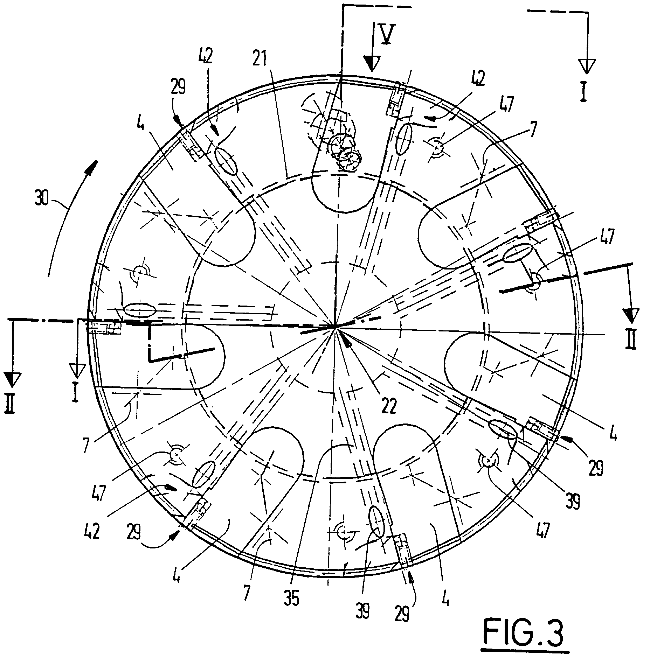

Auf die durch Zentralfläche 8 und Umfangsfläche 9 gebildete Stirnseite des Grundkörpers 3 ist eine Haltescheibe 15 aufgesetzt. Die Haltescheibe 15 umfaßt mit an ihrem Umfang angeordneten, etwa radial nach außen offenen Nuten 16 die in den Nuten 16 einliegenden Tragkörper 4 seitlich und rückseitig im wesentlichen formschlüssig (Fig. 3). Die Nuten 16 sind dadurch nach Art von mit den Tragkörpern 4 gefüllten Taschen wirksam.

Die Zentralfläche 8 und die Umfangsfläche 9 sind eben und verlaufen zueinander parallel. Sie stehen in einem rechten Winkel 17 zur Längsachse 1 des Grundkörpers 3.

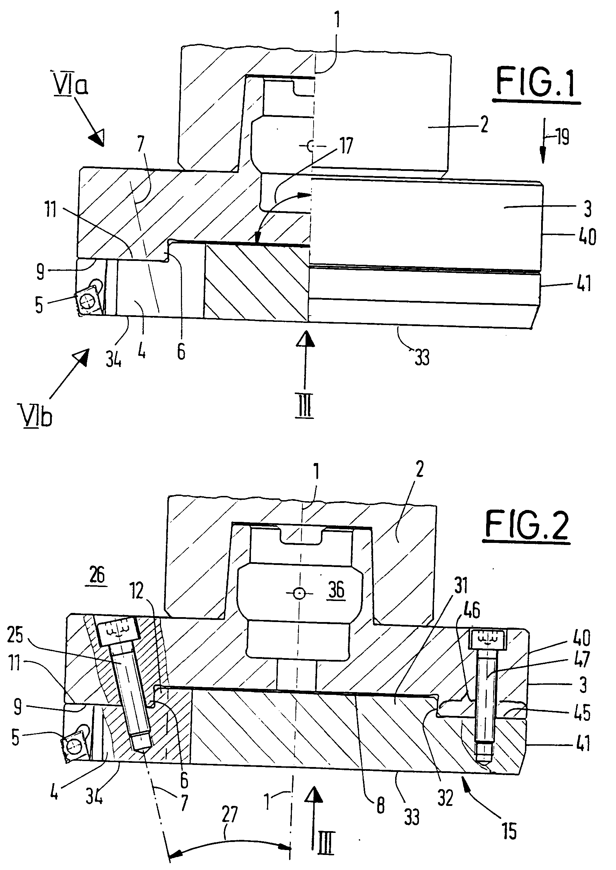

Die Stufe 6 zwischen Zentralfläche 8 und Umfangsfläche 9 enthält eine Stufenfläche 18 (Fig. 6a). Sie ist durch die Mantelfläche eines Zylinders gebildet. Wegen der besseren Formschlußhaftung bzw. in Richtung der Längsachse 1 wirksamer Verschiebesicherung ist die Stufenflache 18 zweckmäßig mit einem Hinterschnitt versehen, der am einfachsten dadurch gebildet wird, daß die Mantelfläche anstelle einer Zylinderform die eines Kegelstumpfes mit der Längsachse 1 des Grundkörpers 3 als Kegelachse bildet. Der diese Mantelfläche bildende Kegel verjüngt sich in Richtung auf das Werkstück 10 bzw. in Pfeilrichtung 19 (Fig. 1 und 6). Durch diese vorteilhatte Kegelmantelform der Stufenfläche 18 bildet diese mit der Umfangsflache 9 einen Winkel 20 von weniger als 90° mit der Zentralfläche 8. Die Stufe 6 im Grundkörper 3 verläuft konzentrisch zur Längsachse 1. Die Stufenkante 14 bildet daher einen Kreis 21 um den Mittelpunkt 22 des Fräsers (Fig.3) bzw. um die Längsachse 1.

Die Tragkörper 4 sind mit ihren Böden 11 gegen die Umfangsfläche 9 des Grundkörpers 3 verspannt. Die Böden 11 der Tragkörper 4 sind eben und liegen mit Flächenkontakt auf der Umfangsfläche 9 auf. Die Gegenstufen 12 der Tragkörper 4 sind durch einen über den Tragkörperboden 11 hinausstehenden Formvorsprung 23 gebildet. Die in Montagestellung der Tragkörper 4 etwa radial außenliegenden Flanken 24 der Formvorsprünge 23 weisen eine zur Stufenfläche 18 des Grundkörpers 3 komplementäre Oberflächengestalt derart auf, daß sie mit Flachenkontakt an der Stufenfläche 18 anliegen.

Die Tragkörper 4 sind durch jeweils eine Spannschraube 25 (Fig.2) mit dem Grundkörper 3 verspannt. Die Spannschraube 25 durchsetzt den Grundkörper 3 von der dem Tragkörper 4 abgewandten Antriebsseite 26 her und ist auch von der Antriebsseite 26 des nach Art eines Flansches radial über die Werkzeugmaschinenspindel 2 hinausstehenden Grundkörpers 3 bedienbar. Die Spannachsen 7 der Spannschrauben 25 bilden mit der Längsachse 1 des Grundkörpers einen spitzen, sich zur Antriebsseite 26 hin öffnenden Winkel 27. Dadurch werden die Tragkörper 4 sowohl mit ihren Böden 11 als auch mit den Außenflanken 24 ihrer Formvorsprünge 23 gegen deren Gegenflächen 9,18 am Grundkörper 3 verspannt. Die Spannachsen 7 der Spannschrauben 25 schneiden die Tragkörper 4 im Bereich etwa ihrer Mittellängsebenen 28.

Die Tragkörper 4 sind mit ihren Mittellängsebenen 28 von einer exakten Radialstellung zur Längsachse 1 des Grundkörpers 3 abweichend derart am Grundkörper 3 positioniert, daß Ihr umfangsseitiges, die Schneidplatte 5 tragendes Flankenende 29 in Rotationsrichtung 30 der exakten Radialstellung vorauseilt (Fig.3).

Die Haltescheibe 15 steht mit einem zur Längsachse 1 des Grundkörpers 3 konzentrischen Ringvorsprung 31 aus der Ebene der Umfangsfläche 9 des Grundkörpers 3 in Richtung auf dessen Zentralfläche 8 vor. Der Ringvorsprung 31 liegt mit seinem etwa zylindrischen Umfangsmantel 32 mit Paßsitz formschlüssig an der Stufenfläche 18 des Grundkörpers 3 an.

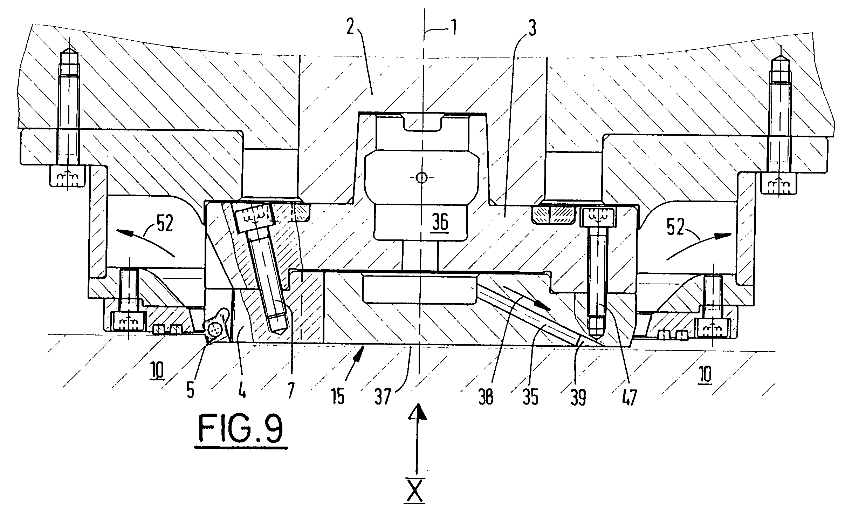

Die Stirnfläche 33 der Haltescheibe 15 liegt etwa in der von den Deckflächen 34 der Tragkörper 4 aufgespannten Ebene. In einer bevorzugten Ausführungsform ist die Haltescheibe 15 von Durchtrittskanälen 35 für Druckluft durchsetzt (Fig.9). Durch die Durchtrittskanäle 35 wird die Druckluft von innen aus dem Zentralbereich 36 des Grundkörpers 3 nach außen in Richtung auf die Arbeitsfuge 37 zwischen Werkstück 10 und Fräser geblasen. Die Blasrichtung 38 ist dabei im wesentlichen radial nach außen gerichtet. Die Durchtrittskanäle 35 münden im Bereich ihrer Öffnungen 39 in die Arbeitsfüge 37. Die Blasrichtung 38 ist auf die Schneidplatten 5 bzw. auf die Flankenenden 29 der Tragkörper 4 gerichtet.

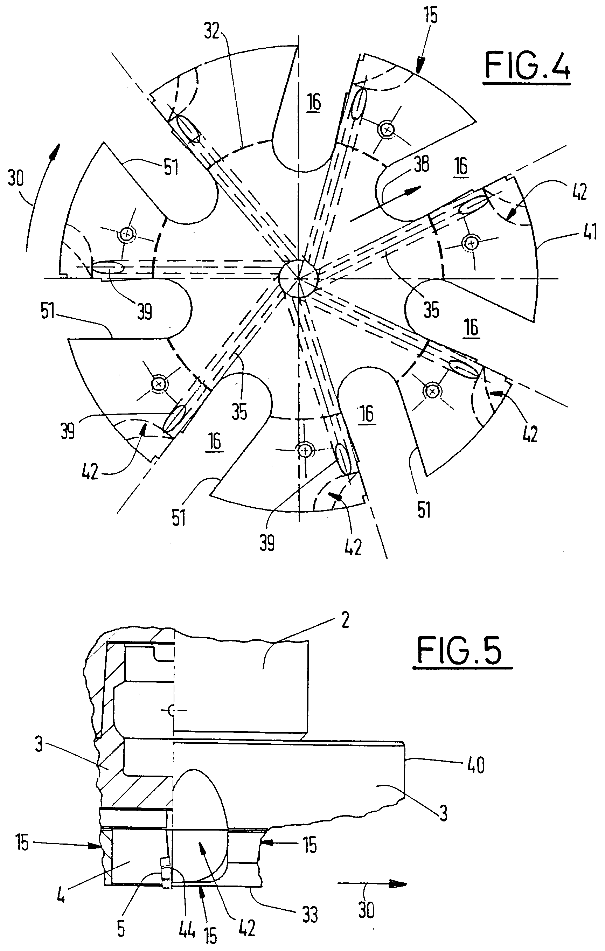

Auf dem Umfangsmantel 40 des Grundkörpers 3 und dem gleichgroßen Umfangsmantel 41 der Haltescheibe 15 ist einem jeden Tragkörper 4 eine gesonderte, nach außen offene Spankammer 42 (Fig. 5) zugeordnet. Die Spankammer 42 reicht bis an die Stirnfläche 33 der Haltescheibe 15 und überdeckt dabei mindestens teilweise die die Schneidkanten 43 enthaltende Schneidplattenoberfläche 44. Die Spankammern 42 sind in Rotationsrichtung 30 der Schneidplattenoberfläche 44 vorgelagert.

Die Haltescheibe 15 ist mit der Stirnfläche 45 ihres flanschartig über den Ringvorsprung 31 radial hinausstehenden Umfangsbereiches 46 gegen die parallele Umfangsfläche 9 des Grundkörpers 3 unter Spannung fixiert. Die Fixierschrauben 47 sind von der Antriebsseite 26 des Grundkörpers 3 her in die Haltescheibe 15 eingeschraubt. Die Spannachsen 7 der Spannschrauben 25 für die Tragkörper 4 verlaufen windschief zur Längsachse 1 des Grundkörpers 3. Die Tragkörper 4 werden mit Ihren den jeweiligen Schneidplattenflanken 49 gegenüberliegenden Spannflanken 50 gegen die Gegenflanken 51 der zugeordneten Nuten 16 der Haltescheiben 15 verspannt. Die die Tragkörper 4 formschlüssig umfassenden Nuten 16 der Haltescheiben 15 verjüngen sich radial nach außen leicht keilartig.

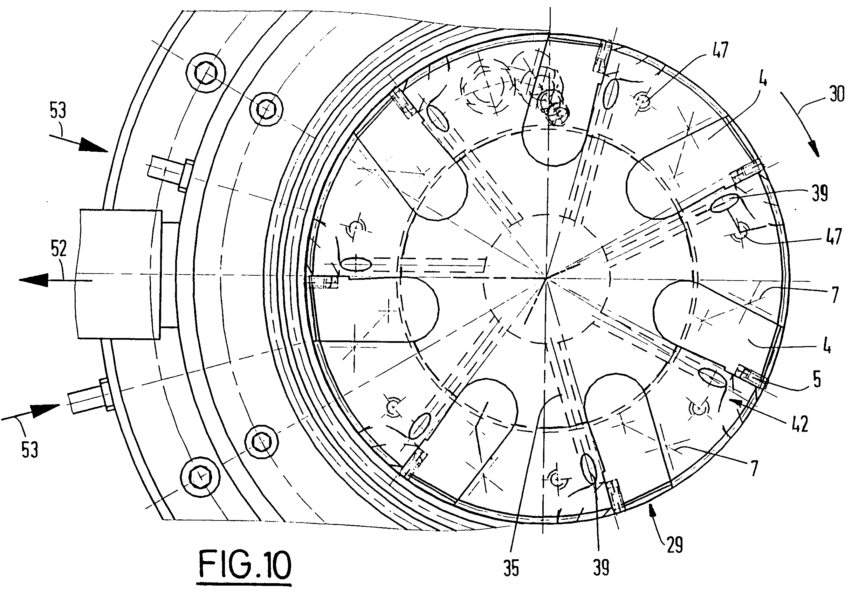

In Fig. 9 und 10 ist der erfindungsgemäße Fräser als Ensemble mit dem ihn umgebenden Gehäuse einer Vorrichtung zum Abführen bzw. Absaugen der Späne dargestellt. Über die Werkzeugmaschinenspindel 2 bzw. den Zentralbereich 36 des Grundkörpers 3 wird Druckluft im wesentlichen radial nach außen durch die Durchtrittskanäle 35 aus den Öffnungen 39 in die Arbeitsebene bzw. in die Arbeitsfuge 37 ausgeblasen. Die Blasrichtung 38 treibt im Bereich der Schneidplatten 5 anfallende Späne in den Bereich des Umfangsmantels 40,41 von Grundkörper 3 und Haltescheibe 15, wo zu ihrer Aufnahme die Spankammern 42 am Fräserumfang angeordnet sind. Von dort werden die Späne in Pfeilrichtung 52 im wesentlichen radial nach außen abgesaugt. Eine Saugwirkung wird bereits durch die Fliehkraft erzielt, die infolge der Rotation des Fräserkörpers entsteht. Diese Fliehkraftwirkung wird durch die in Pfeilrichtung 52 applizierte Saugwirkung bzw. durch die in Pfeilrichtung 53 in den Fräser eingeleitete Druckluft unterstützt und verstärkt.

Der erfindungsgemäße Fräser eignet sich besonders für hohe Umfangsgeschwindigkeiten mit entsprechend hohen Fliehkräften.

### Bezugszeichenliste

- 1: Längsachse
- 2: Werkzeugmaschinenspindel
- 3: Grundkörper
- 4: Tragkörper
- 5: Schneidplatte
- 6: Stufe
- 7: Spannachse
- 8: Zentralfläche
- 9: Umfangsfläche
- 10: Werkstück
- 11: Boden
- 12: Gegenstufe
- 13: Zwickel
- 14: Stufenkante
- 15: Haltescheibe
- 16: Nut
- 17: rechter Winkel
- 18: Stufenfläche
- 19: Pfeilrichtung
- 20: Winkel
- 21: Kreis
- 22: Mittelpunkt
- 23: Formvorsprung
- 24: Flanke
- 25: Spannschraube
- 26: Antriebsseite
- 27: Winkel
- 28: Mittellängsebene
- 29: Flankenende
- 30: Rotationsrichtung
- 31: Ringvorsprung
- 32: Umfangsmantel
- 33: Stirnfläche
- 34: Deckfläche
- 35: Durchtrittskanal
- 36: Zentralbereich
- 37: Arbeitsfuge
- 38: Blasrichtung
- 39: Öffnung
- 40: Umfangsmantel
- 41: Umfangsmantel
- 42: Spankammer
- 43: Schneidkante
- 44: Schneidplattenoberfläche
- 45: Stirnfläche
- 46: Umfangsbereich
- 47: Fixierschraube
- 48: Achse
- 49: Schneidplattenflanke
- 50: Spannflanke
- 51: Gegenflanke
- 52: Pfeilrichtung
- 53: Pfeilrichtung

## Patentansprüche

1. Fräser mit einem um seine Längsachse (1) rotierend antreibbaren Grundkörper (3) und an dessen Umfang verteilt angeordneten Tragkörpern (4) für Schneidplatten (5) aus einem harten Schneidwerkstoff,
wobei die Tragkörper (4) gegen die auf sie einwirkende Fliehkraft durch einen Grundkörperanschlag abgestützt und gegen den Grundkörperanschlag verspannt sind,
dadurch gekennzeichnet,
- daß die Stirnseite des Grundkörpers (3) eine Zentralfläche (8) und eine diese kranzartig umgebende Umfangsfläche (9) enthält,
- daß das Höhenniveau der Umfangsfläche (9) über das Höhenniveau der Zentralflache (8) hinaussteht,
- daß die Zentralfläche (8) und die Umfangsfläche (9) zwischen sich eine als Grundkörperanschlag wirksame Stufe (6) bilden,
- daß die Tragkörper (4) an ihrem Boden (11) eine mit der Grundkörperstufe (6) formschlüssig zusammenwirkende Gegenstufe (12) aufweisen und gegen die Stirnseite des Grundkörpers (3) verspannt sind und
- daß auf die Stirnseite des Grundkörpers (3) eine Haltescheibe (15) aufgesetzt ist,
-- die mit an ihrem Umfang (41) angeordneten, etwa radial nach außen offenen und nach Art von Taschen wirksamen Nuten (16) die Tragkörper (4) seitlich und rückseitig im wesentlichen formschlüssig umfaßt.

2. Fräser nach Anspruch 1,
dadurch gekennzeichnet,
daß die Zentralfläche (8) und die Umfangsfläche (9)
- eben sind,
- zueinander parallel sind und
- in einem rechten Winkel (17) zur Grundkörperachse (1) stehen.

3. Fräser nach Anspruch 1 oder 2,
dadurch gekennzeichnet,
daß die die Stufe (6) zwischen Zentralfläche (8) und Umfangsfläche (9) bildende Stufenfläche (18) die Mantelfläche eines Zylinders oder eines Kegelstumpfes mit der Grundkörperachse (1) als Zylinder- bzw. Kegelachse bildet.

4. Fräser nach Anspruch 3,
dadurch gekennzeichnet,
daß der Kegel in vom Grundkörper (3) weggewandter Richtung konvergiert derart, daß die Stufenfläche (18) einen spitzen Winkel (20) von geringfügig weniger als 90° mit der Zentralfläche (8) bildet.

5. Fräser nach einem der Ansprüche 1 bis 4,
dadurch gekennzeichnet,
daß die Tragkörper (4) mit ihren Böden (11) gegen die Umfangsfläche (9) verspannt sind.

6. Fräser nach Anspruch 5,
dadurch gekennzeichnet,
daß die Tragkörperböden (11) eben sind und mit Flächenkontakt auf der Umfangsfläche (9) aufliegen.

7. Fräser nach Anspruch 5 oder 6,
dadurch gekennzeichnet,
daß die Tragkörper (4) an ihren in Montagestellung radial innenliegenden Enden einen über den Tragkörperboden (11) hinausstehenden Formvorsprung (23) als Gegenstufe aufweisen.

8. Fräser nach einem der Ansprüche 5 bis 7,
dadurch gekennzeichnet,
daß die in Montagestellung der Tragkörper (4) etwa radial außenliegenden Flanken (24) der Formvorsprünge (23) eine zur Stufenfläche (18) des Grundkörpers (3) komplementäre Oberflächengestalt derart aufweisen, daß sie mit Flächenkontakt an der Stufenfläche (18) anliegen.

9. Fräser nach einem oder mehreren der vorhergehenden Ansprüche,
dadurch gekennzeichnet,
- daß die Tragkörper (4) durch eine den im Bereich seiner Umfangsfläche (9) flanschartig ausgebildeten Grundkörper (3) von dessen dem Tragkörper (4) abgewandter Antriebsseite (26) her durchsetzender Spannschraube (25) verspannt sind und
- daß die Spannachsen (7) der Spannschrauben (25) mit der Grundkörperachse (1) einen spitzen, sich zur Antriebsseite (26) des Grundkörpers (3) hin öffnenden Winkel (27) derart bilden, daß die Tragkörper (4) sowohl mit ihren Böden (11) als auch mit den Außenflanken (24) ihrer Formvorsprünge (23) gegen deren Gegenflächen (9,18) am Grundkörper (3) verspannt werden.

10. Fräser nach Anspruch 9,
dadurch gekennzeichnet,
daß die Spannachsen (7) die Mittellängsebenen (28) der Tragkörper (4) schneiden.

11. Fräser nach einem oder mehreren der vorhergehenden Ansprüche,
dadurch gekennzeichnet,
daß die Tragkörper (4) mit ihren Mittellängsebenen (28) von einer exakten Radialstellung zur Grundkörperachse (1) abweichend derart am Grundkörper (3) positioniert sind, daß ihr umfangsseitiges, die Schneidplatte (5) tragendes Flankenende (29) in Rotations- bzw. Schnittrichtung (30) der exakten Radialstellung vorauseilt.

12. Fräser nach einem oder mehreren der vorhergehenden Ansprüche,
dadurch gekennzeichnet,
- daß die Haltescheibe (15) mit einem zur Grundkörperachse (1) konzentrischen Ringvorsprung (31) aus der Ebene der Umfangsfläche (9) des Grundkörpers (3) in Richtung auf dessen Zentralfläche (8) vorsteht und
- daß der Ringvorsprung (31) mit seinem Umfangsmantel (32) mit Paßsitz formschlüssig an der Stufenfläche (18) des Grundkörpers (3) anliegt.

13. Fräser nach Anspruch 12,
dadurch gekennzeichnet,
daß der Umfangsmantel (32) zylindrisch ist.

14. Fräser nach Anspruch 12 oder 13,
dadurch gekennzeichnet,
daß die Stirnfläche (33) der Haltescheibe (15) etwa in der von den Deckflächen (34) der Tragkörper (4) aufgespannten Ebene liegt.

15. Fräser nach einem der Ansprüche 12 bis 14,
gekennzeichnet durch
- die Haltescheibe (15) durchsetzende,
- von der Oberseite der Haltescheibe (15) im wesentlichen radial nach außen und auf die Schneidplattenenden der Tragkörper (4) gerichtete
Durchtrittskanäle (35) für Druckluft zum aus dem Bereich der Stirnfläche (33) erfolgenden Abtransport der Späne.

16. Fräser nach einem der Ansprüche 12 bis 15,
dadurch gekennzeichnet,
daß die Außendurchmesser von Grundkörper (3) und Haltescheibe (15) etwa gleichgroß sind.

17. Fräser nach einem der Ansprüche 12 bis 16,
dadurch gekennzeichnet,
- daß auf dem Umfangsmantel (40,41) von Grundkörper (3) und Haltescheibe (15) einem jeden Tragkörper eine gesonderte, nach außen offene Spankammer (42) zugeordnet ist,
- daß die Spankammer (42) bis an die Stirnfläche (33) der Haltescheibe (15) reicht und dabei die die Schneidkanten (43) enthaltende Schneidplattenoberfläche (44) mindestens teilweise überdeckt und
- daß die Spankammer (42) in Rotationsrichtung (30) des Fräsers der Schneidplattenoberfläche (44) vorgelagert ist.

18. Fräser nach einem der Ansprüche 12 bis 17,
dadurch gekennzeichnet,
daß die Haltescheibe (15) mit der Stirnfläche (45) ihres flanschartig über den Ringvorsprung (31) radial hinausstehenden Umfangsbereiches (46) gegen die parallele Umfangsfläche (9) des Grundkörpers (3) unter Spannung fixiert ist.

19. Fräser nach Anspruch 18,
dadurch gekennzeichnet,
daß Fixierschrauben (47) von der Antriebsseite (26) des Grundkörpers (3) her in die Haltescheibe (15) eingeschraubt sind.

20. Fräser nach einem oder mehreren der vorhergehenden Ansprüche,
dadurch gekennzeichnet,
daß die Achsen (7) der Spannschrauben (25) für die Tragkörper (4) windschief zur Grundkörperachse (1) derart verlaufen, daß die Tragkörper (4) mit ihren den jeweiligen Schneidplattenflanken (49) gegenüberliegenden Spannflanken (50) gegen die Gegenflanken (51) der zugeordneten Nuten (16) der Haltescheibe (15) verspannt werden.

21. Fräser nach einem oder mehreren der vorhergehenden Ansprüche,
dadurch gekennzeichnet,
daß sich die die Tragkörper (4) formschlüssig umfassenden Nuten (16) der Haltescheibe (15) radial nach außen keilartig verjüngen.

## Claims

1. Milling cutter having a base body (3) that can be driven in a rotating manner around its longitudinal axis (1) and support bodies (4) which are distributed over the surface of the latter and are intended for cutting plates (5) made of a hard cutting material, the support bodies (4) being supported against the centrifugal force operating thereon through a base body stopper and being tensioned against the base body stopper,
characterized by the facts that
- the end face of the base body (3) comprises a central area (8) and a peripheral area (9) surrounding the latter annularly,
- the height of the peripheral area (9) projects beyond the height of the central area (8),
- the central area (8) and the peripheral area (9) together form a step (6) acting as a base body stopper.
- the support bodies (4) comprise at their base (11) a counter-step (12) which cooperates in interlocking manner with the base body step (6) and is tensioned against the end face of the base body (3), and
- a mounting plate (15) is disposed at the end face of the base body (3), which mounting plate, by means of grooves (16) which are open approximately radially outwards and which operate in the manner of pockets, embraces the support bodies (4) at the sides and the rear in a substantially interlocking manner.

2. Milling cutter in accordance with Claim 1,
characterized by the fact that
the central area (8) and the peripheral area (9)
- are level,
- are parallel to each other, and
- stand at a right angle (17) to the base body axis (1).

3. Milling cutter in accordance with Claims 1 or 2,
characterized by the fact that
the stepped surface (18) forming the step (6) between the central area (8) and the peripheral area (9) forms the surface area of a cylinder or a truncated cone with the base body axis (1) as the cylinder or cone axis.

4. Milling cutter in accordance with Claim 3,
characterized by the fact that
the cone converges in the direction facing away from the base body (3) such that the stepped surface (18) forms an acute angle (20) of slightly less than 90° with the central area (8).

5. Milling cutter in accordance with one of Claims 1 to 4,
characterized by the fact that
the support bodies (4) are tensioned with their bases (11) against the peripheral area (9).

6. Milling cutter in accordance with Claim 5,
characterized by the fact that
the support body bases (11) are level and lie with surface contact on the peripheral area (9).

7. Milling cutter in accordance with Claim 5 or 6,
characterized by the fact that
the support bodies (4) have on their radially inner ends in the mounted position a mold projection (23) extending beyond the support body bases (11) as a counter-step.

8. Milling cutter in accordance with one of Claims 5 to 7,
characterized by the fact that
the approximately radially external flanks (24) of the mold projection (23) in the mounting position of the support bodies (4) have a surface formation that is complementary to the stepped surface (18) of the base body (3) such that they lie with surface contact on the stepped surface (18).

9. Milling cutter in accordance with one or more of the preceding claims,
characterized by the fact that
- the support bodies (4) are tensioned by means of a straining screw (25) that permeates the base body (23), being embodied in a flange-like manner in the area of its peripheral area (9), from its driving end (26), facing away from the support body (4), and
- the clamping axes (7) of the straining screws (25) together with the base body axis (1) form an acute angle (27) opening towards the driving end (26) of the base body (3) such that the support bodies (4) are tensioned with their bases (11) as well as with the outer flanks (24) of their mold projections (23) against their opposite areas (9, 18) on the base body (3).

10. Milling cutter in accordance with Claim 9,
characterized by the fact that
the tension axes (7) cut the central longitudinal planes (28) of the support bodies (4).

11. Milling cutter in accordance with one or more of the preceding claims,
characterized by the fact that
the support bodies (4) are positioned on the base body (3) with their central longitudinal planes (28) divergent from an exact radial position to the base body axis (1) such that their periphery-side flank end (29) bearing the cutting plate (5) protrudes from the exact radial position in the rotational or cutting direction (30).

12. Milling cutter in accordance with one or more of the preceding claims,
characterized by the fact that
- the mounting plate (15) extends with an annular projection (31) being concentric to the base body axis (1) beyond the plane of the peripheral area (9) of the base body (3) in the direction of its central area (8) and
- the peripheral surface (32) of the annular projection (31) interlock perfectly with the stepped surface (18) of the base body (3).

13. Milling cutter in accordance with Claim 12,
characterized by the fact that
the peripheral surface (32) is cylindrical.

14. Milling cutter in accordance with Claim 12 or 13,
characterized by the fact that
the end face (33) of the mounting plate (15) lies approximately in the plane tensioned by the cover surfaces (34) of the support bodies (4).

15. Milling cutter in accordance with one of Claims 12 to 14,
characterized by
penetration channels (35) for compressed air to remove the chips resulting from the area of the end face (33), which penetration Channels
- permeate the mounting plate (15) and
- basically face radially outwards and to the cutting plate ends of the support bodies (4) from the top side of the mounting plate (15).

16. Milling cutter in accordance with one of Claims 12 to 15,
characterized by the fact that
the outer diameters of the base body (3) and the mounting plate (15) are approximately the same.

17. Milling cutter in accordance with one of Claims 12 to 16,
characterized by the fact that
- on the peripheral surface (40, 41) of the base body (3) and the mounting plate (15), a separate chip space (42) facing outwards is associated with each support body,
- the chip space (42) extends as far as the end face (33) of the mounting plate (15) and thereby at least partially covers the cutting plate surface (44) containing the cutting edges (43) and
- the chip space (42) is placed in front of the cutting place surface (44) in the rotational direction (30) of the milling cutter.

18. Milling cutter in accordance with one of Claims 12 to 17,
characterized by the fact that
the mounting plate (15) is positioned under tension against the parallel peripheral area (9) of the base body (3) with the end face (45) of its flange-like peripheral region (46) extending beyond the annular projection (31).

19. Milling cutter in accordance with Claim 18,
characterized by the fact that
fixing screws (47) are screwed into the mounting plate (15) from the driving side (26) of the base body (3).

20. Milling cutter in accordance with one or more of the preceding claims,
characterized by the fact that
the axes (7) of the straining screws (25) for the support bodies (4) run at an angle to the base body axis (1) such that the support bodies (4) are tensioned with their clamping flanks (50) opposite each cutting plate flank (49) against the counter-flanks (51 ) of the associated grooves (16) of the mounting plate (15).

21. Milling cutter in accordance with one or more of the preceding claims,
characterized by the fact that
the grooves (16) of the mounting plate (15) which grooves embrace the support bodies (4) in an interlocking manner, taper outwards radially in a cone-like manner.

## Revendications

1. Fraise, comportant un corps de base (3) susceptible d'être entraîné en rotation autour de son axe longitudinal (1) et des corps support (4), disposés de façon répartie sur sa périphérie, pour des plaques de coupe (5) réalisées en un matériau de coupe dur,
les corps support (4) étant soutenus, contre l'effet de la force centrifuge agissant sur eux, au moyen d'une butée de corps de base, et étant serrés contre la butée de corps de base,
caractérisée
- en ce que la face frontale du corps de base (3) comporte une surface centrale (8) et une surface périphérique (9), entourant celle-ci à la façon d'une couronne,
- en ce que le niveau en hauteur de la surface périphérique (9) ressort du niveau en hauteur de la surface centrale (8),
- en ce que la surface centrale (8) et la surface périphérique (9) constituent entre elles un étagement (6) agissant comme butée de corps de base,
- en ce que les corps support (4) présentent, sur leur fond (11), un contre-étagement (12) coopérant, avec ajustement de forme, avec l'étagement (6) du corps de base et sont serrés contre la face frontale du corps de base (3), et
- en ce que, sur la face frontale du corps de base (3) est appliqué un disque de retenue (15) qui entoure, sensiblement avec ajustement de forme, latéralement et en face arrière, les corps support (4), par des rainures (16) disposées sur sa périphérie (41), ouvertes à peu près radialement vers l'extérieur et agissant à la façon de poches.

2. Fraise selon la revendication 1, caractérisée en ce que la surface centrale (8) et la surface périphérique (9),
- sont planes,
- sont parallèles entre elles, et
- sont orientées à angle droit (17) par rapport à l'axe (1) du corps de base.

3. Fraise selon la revendication 1 ou 2, caractérisée en ce que la surface d'étagement (18), constituant l'étagement (6) entre la surface centrale (8) et la surface périphérique (9), constitue la surface d'enveloppe d'un cylindre ou d'un tronc de cône ayant l'axe (1) du corps de base comme axe de cylindre ou axe de cône.

4. Fraise selon la revendication 3, caractérisée en ce que
le cône converge dans la direction s'écartant du corps de base (3), en ce que la surface d'étagement (18) fait avec la surface centrale (8) un angle aigu (20) d'une valeur légèrement inférieure à 90°.

5. Fraise selon l'une des revendications 1 à 4, caractérisée en ce que les corps support (4) sont serrés par leurs fonds (11) contre la surface périphérique (9).

6. Fraise selon la revendication 5, caractérisée en ce que
les fonds (11) des corps support sont plans et reposent sur la surface périphérique (9) par un contact de surface.

7. Fraise selon la revendication 15 ou 6, caractérisée en ce que
les corps support (4) présentent, sur leurs extrémités radialement intérieures dans la position de montage, une saillie profilée (23), dépassant du fond (11) du corps support et faisant office de contre-étagement.

8. Fraise selon l'une des revendications 5 à 7, caractérisée en ce que les flancs (24) des saillies profilées (23) qui sont situés à peu près radialement vers l'extérieur dans la position de montage des corps support (4), présentent une configuration de surface qui est complémentaire de celle de la surface d'étagement (18) du corps de base (3), de manière qu'ils appuyent avec un contact de surface sur la surface d'étagement (18).

9. Fraise selon l'une ou plusieurs des revendications précédentes, caractérisée en ce que
- les corps support (4) sont serrés au moyen d'une vis de serrage (25) qui traverse le corps de base (3) dans la zone de sa surface périphérique (9) dans laquelle il a la forme d'une bride, depuis la face d'entraînement (26) de ce corps de base qui est opposée au corps support (4), et
- en ce que les axes de serrage (7) des vis de serrage (25) font avec l'axe (1) du corps de base un angle (27) aigu, s'ouvrant en direction du côté entraînement (26) du corps de base (3), de manière que les corps support (4) soient serrés, tant par leurs fonds (11) que par les flancs extérieurs (24) de leurs saillies profilées (23), contre leurs contresurfaces (9, 18) sur le corps de base (3).

10. Fraise selon la revendication 9, caractérisée en ce que les axes de serrage (7) coupent les plans longitudinaux médians (28) des corps support (4).

11. Fraise selon l'une ou plusieurs des revendications précédentes, caractérisée en ce que
les corps support (4) sont positionnés sur le corps de base (3) avec leurs plans longitudinaux médians s'écartant d'une position radiale exacte par rapport à l'axe (1) du corps de base de telle sorte que leur extrémité de flanc (29) qui est située du côté de la périphérie et qui porte la plaque de coupe (5) se trouve à l'avant de la position radiale exacte dans le sens de rotation, respectivement dans le sens de coupe (30).

12. Fraise selon l'une ou plusieurs des revendications précédentes, caractérisée en ce que
- le disque de retenue (15) fait saillie, par une saillie annulaire (31) concentrique par rapport a l'axe (1) du corps de base, hors du plan de la surface périphérique (9) du corps de base (3), dans la direction de sa surface frontale (8), et
- en ce que la saillie annulaire (31) appuie par son enveloppe périphérique (32), avec un ajustement fin et ajustement de forme, sur la surface étagée (18) du corps de base (3).

13. Fraise selon la revendication 12, caractérisée en ce que
l'enveloppe périphérique (32) est cylindrique.

14. Fraise selon la revendication 12 ou 13, caractérisée en ce que
la face frontale (33) du disque de retenue (15) est située à peu près dans le plan déterminé par les surfaces de recouvrement (34) des corps support (4).

15. Fraise selon l'une des revendications 12 à 14, caractérisée par
des canaux de passage (35) destinés à de l'air comprimé, prévus pour effectuer le transport d'évacuation des copeaux s'effectuant hors de la zone de la face frontale (33),
- les canaux traversant le disque de retenue (15),
- et étant orientés, depuis la face supérieure du disque de retenue (15), sensiblement radialement vers l'extérieur et en direction des extrémités de plaque de coupe des corps support (4).

16. Fraise selon l'une des revendications 12 à 15, caractérisée en ce que les diamètres extérieurs du corps de base (3) et du disque de retenue (15) sont à peu près égaux.

17. Fraise selon l'une des revendications 12 à 16, caractérisée en ce que
- sur l'enveloppe périphérique (40, 41) du corps de base (3) et du disque de retenue (15), est associée à chaque corps support une chambre à copeaux (42) séparée, ouverte vers l'extérieur,
- en ce que la chambre à copeaux (42) arrive jusqu'à la surface frontale (33) du disque de retenue (15) et recouvre au moins partiellement la surface supérieure (44) de la plaque de coupe contenant les arêtes de coupe (43), et
- en ce que la chambre à copeaux (42) est placée à l'avant de la face supérieure (44) de la plaque de coupe, dans le sens de rotation (30) de la fraise.

18. Fraise selon l'une des revendications 12 à 17, caractérisée en ce que
le disque de retenue (15) est fixé sous contrainte contre la surface périphérique (9) parallèle du corps de base (3), par la face frontale (45) de sa zone périphérique (46) ressortant radialement, à la façon d'une bride, sur la saillie annulaire (31).

19. Fraise selon la revendication 18, caractérisée en ce que
des vis de fixation (47) sont vissées depuis le côté entraînement (26) du corps de base (3) dans le disque de retenue (15).

20. Fraise selon l'une ou plusieurs des revendications précédentes, caractérisée en ce que
les axes (7) des vis de serrage (25) pour les corps de base (4) s'étendent en oblique par rapport à l'axe (1) du corps de base, de manière que les corps support (4) soient serrés, par leurs flancs de serrage (50) placés à l'opposé des flancs de plaques de coupe (49) respectifs, contre les contre-flancs (51) des rainures (16) associées du disque de retenue (15).

21. Fraise selon l'une ou plusieurs des revendications précédentes, caractérisée en ce que
les rainures (16) entourant avec ajustement de forme les corps support (4), du disque de retenue (15), vont en s'effilant radialement vers l'extérieur à la façon d'un coin.
